# EUROPÄISCHE PATENTSCHRIFT

(11) **EP 3 820 692 B1**
(45) Veröffentlichungstag und Bekanntmachung des Hinweises auf die Patenterteilung: **02.08.2023**
(21) Anmeldenummer: 19732954.3
(22) Anmeldetag: 18.06.2019
(51) Int. Cl.: B32B 1/08, B32B 27/20, B32B 27/08, B32B 27/34

(54) **FLUIDLEITUNG**
FLUID LINE
CONDUITE DE FLUIDE

(30) Priorität: 09.07.2018 DE 102018116567
(43) Veröffentlichungstag der Anmeldung: 19.05.2021
(73) Patentinhaber: NORMA Germany GmbH, 63477 Maintal (DE)
(72) Erfinder: KOHL, Carolin, 63486 Bruchköbel (DE); STEINKAMP, Christoph, 63599 Biebergemünd (DE); BAUER, Andreas, 63785 Obernburg (DE); SCHOUMACHER, David, 57350 Schoeneck (FR); PIOVESAN, Olivier, 54660 Moutiers (FR)
(74) Vertreter: Patentanwälte Olbricht Buchhold Keulertz
(86) Internationale Anmeldenummer: PCT/EP2019/066103
(87) Internationale Veröffentlichungsnummer: WO 2020/011500

(56) Entgegenhaltungen:
- EP-A1- 2 066 494
- EP-A1- 3 192 650
- US-A1- 2009 297 749

## Beschreibung

Die Erfindung betrifft eine Fluidleitung mit einem Rohr aus einem mehrschichtigem Kunststoffmaterial, wobei das Rohr einen Innenraum umgibt.

Leitungen zum Transport von chemisch aktiven Fluiden, wie z. B. Kraftstoffen in Fahrzeugen, müssen während des Einsatzes spezifischen Anforderungen genügen. So darf das Material der Leitung nicht durch das Fluid aufgelöst werden. Dies soll auch bei höheren Temperaturen vermieden werden. Weiter muss die Leitung für das transportierte Fluid und seine chemischen Komponenten impermeabel sein, damit flüchtige Stoffe, die in dem Fluid enthalten sein können, nicht durch die Wandung der Leitung dringen können. Damit soll zum Einen eine Verringerung der Qualität des transportierten Fluids und zum Anderen ein Austreten der flüchtigen Stoffe in die Umwelt vermieden werden. Weiter sollen Auswaschungen vermieden werden. Dies ist insbesondere dann relevant, wenn das Fluid in der Leitung steht, d.h., wenn zumindest zeitweise kein Transport des Fluids stattfindet. Weiter müssen die Leitungen mechanische Eigenschaften Laufweisen, die eine einfache und sichere Verbindung der Leitung mit weiteren Leitungskomponenten erlauben.

Aus EP 2 066 494 B1 ist eine mehrlagige Kraftfahrzeugbrennstoffförderleitung bekannt, umfassend eine innerste erste Lage mit einem Polyamidharz (Nylon 9T), das aus einer Kohlendioxidsäurekomponente und einer Diaminkomponente gebildet wird, eine zweite Lage aus Polyamid 6 (PA6), eine dritte Lage aus einer Copolyamid (CoPa)-basierten Kopplungslage und eine externe vierte Lage aus Polyamid 12 (PA12).

Aufgabe der Erfindung ist es, eine Fluidleitung der eingangs genannten Art bereitzustellen, die eine verringerte Auswaschung der Materialien der Fluidleitung, eine verringerte Durchlässigkeit von flüchtigen Stoffen und dennoch für eine Verbindung mit anderen Komponenten einer Leitung adäquate mechanische Eigenschaften aufweist.

Hauptmerkmale der Erfindung sind im kennzeichnenden Teil von Anspruch 1 angegeben. Ausgestaltungen sind Gegenstand der Ansprüche 2 bis 10.

Zur Lösung der Aufgabe ist bei einer Fluidleitung gemäß Anspruch 1 mit einem Rohr aus einem mehrschichtigem Kunststoffmaterial, wobei das Rohr einen Innenraum umgibt, vorgesehen, dass das Rohr eine innere, erste Schicht aus Polyamid 9T (PA9T), eine zweite Schicht aus Polyamid 12 (PA12), eine dritte Schicht aus Polyamid 612 (PA612), eine vierte Schicht aus Polyamid 6 (PA6) und eine äußere, fünfte Schicht aus Polyamid 612 (PA612) aufweist, wobei die innere, erste Schicht den Innenraum begrenzt.

Die Erfindung stellt damit ein Rohr für eine Fluidleitung bereit, das eine mehrschichtige Rohrwand aufweist. Das Rohr umgibt dabei einen Innenraum, durch den das zu transportierende Fluid geführt wird. Die innere, erste Schicht grenzt dabei direkt an den Innenraum an und begrenzt ihn. Dabei ist die innere, erste Schicht aus Polyamid 9T (PA9T) gebildet. Dieses Material stellt eine Schicht bereit, die eine geringe Durchlässigkeit aufweist. Insbesondere bildet sie dabei eine Barriere gegen flüchtige Stoffe des Fluids, wie zum Beispiel Alkohole oder bestimmte Additive von Kraftstoffen. Weiter ist die innere, erste Schicht chemikalien- und hydrolysebeständig und nimmt nur geringe Mengen Wasser auf. Auswaschungen treten allenfalls in geringem Umfang auf. Auch bei hohen Temperaturen umfasst die innere, erste Schicht gute mechanische Eigenschaften, so dass sie formstabil ist. Damit wird durch die innere, erste Schicht eine Barriere für aus dem Projekt austretende Stoffe gebildet, wobei die Barriere dennoch eine ausreichende mechanische Stabilität der Innenwand des Rohrs gewährleistet.

Die zweite Schicht aus Polyamid 12 weist ebenfalls lediglich eine geringe Wasseraufnahme auf, sodass mit der zweiten Schicht eine zusätzliche Barriere gegen austretendes Wasser gebildet wird. Weiter ist die zweite Schicht mechanisch stabil und verbessert die Stabilität des Rohrs auch bei hohen Drücken oder anderen mechanischen Kräften.

Das Polyamid 6 der vierten Schicht ist hoch verfügbar und relativ kostengünstig. Die vierte Schicht aus Polyamid 6 bildet eine Grundstruktur für das Rohr der Fluidleitung.

Die äußere, fünfte Schicht aus Polyamid 612 umfasst eine gute Medienbeständigkeit gegen Fette, Öle, Kraftstoffe, Hydraulikflüssigkeiten, Wasser und Alkalien. Wenn die Fluidleitung in einer Umgebung eingesetzt wird, in der diese Stoffe auf die Außenschicht des Rohrs gelangen können, werden die inneren Schichten durch die äußere, fünfte Schicht geschützt. Damit bildet die äußere, fünfte Schicht eine Schutzschicht gegen äußere Einflüsse für die inneren Schichten. Weiter ist die äußere, fünfte Schicht elastisch.

Durch die Kombination der fünf Schichten in dem Rohr der Fluidleitung weist das Rohr im Vergleich zum Stand der Technik verbesserte Eigenschaften für den Transport von Fluiden auf, die zum Beispiel flüchtige Stoffe oder aggressive chemische Stoffe aufweisen. Dabei ist das Rohr durch das mehrschichtige Kunststoffmaterial dennoch mechanisch stabil und elastisch. Die einzelnen Schichten unterstützen sich gegenseitig und kombinieren ihre Eigenschaften synergetisch so, dass mit der guten chemischen Beständigkeit auch gute mechanische Eigenschaften bereitgestellt werden, um die Fluidleitung in verschiedenen Situationen, die unterschiedliche Anforderungen aufweisen, einzusetzen. So ermöglichen die mechanischen Eigenschaften eine sichere und einfache Verbindung der Fluidleitung mit anderen Komponenten der Leitung.

Die innere, erste Schicht kann eine Dicke im Bereich von 15 % bis 25 %, vorzugsweise 20 %, der gesamten Wanddicke des Rohres aufweisen. Eine innere, erste Schicht, die diese relative Dicke aufweist, bewahrt die Eigenschaften der inneren, ersten Schicht hinsichtlich der Undurchlässigkeit für die Stoffe, die aus dem im Innenraum angeordneten Fluid austreten können.

Die zweite Schicht kann relativ zur gesamten Wanddicke des Rohres eine Dicke im Bereich von 2 % bis 18 %, vorzugsweise 10 %, aufweisen. Die zweite Schicht weist damit eine relative Dicke auf, die in Kombination mit der inneren, ersten Schicht wirkt. Weiter bewirkt diese Dicke bereits eine Erhöhung der mechanischen Stabilität des Rohrs.

Die dritte Schicht kann relativ zur gesamten Wanddicke des Rohres eine Dicke im Bereich von 2 % bis 18 %, vorzugsweise 10 %, aufweisen. Mit dieser relativen Schichtdicke wird eine Erhöhung der Zug- und Biegefestigkeit des Rohrs bewirkt.

Die vierte Schicht kann relativ zur gesamten Wanddicke des Rohres eine Dicke im Bereich von 30 % bis 50 %, vorzugsweise 40 %, umfassen. Mit dieser relativen Schichtdicke wird ein Grundgerüst für die Fluidleitung bereitgestellt, das kostengünstig ist und dennoch mechanische Stabilität verleiht.

Die äußere, fünfte Schicht kann relativ zur gesamten Wanddicke des Rohres eine Dicke im Bereich von 12 % bis 28 %, vorzugsweise 20 %, aufweisen. Damit kann die äußere Schutzschicht, die aus der äußeren, fünften Schicht gebildet wird, einen ausreichenden Schutz gegen äußere, insbesondere chemische Einflüsse für die inneren Schichten bereitstellen, wobei im Vergleich zu den weiteren Schichten eine relativ geringe Menge Material verbraucht wird.

So kann die äußere, fünfte Schicht vorzugsweise zusätzlich ein Farbgranulat aufweisen. Auf diese Weise kann die äußere, fünfte Schicht eingefärbt werden. Der restliche Anteil der äußeren, fünften Schicht kann weiter zusätzlich durch andere Stoffe gebildet werden, die die physikalischen Eigenschaften der äußeren fünften Schicht leicht verändern. Die grundlegenden Eigenschaften der äußeren, fünften Schicht werden durch die das Farbgranulat und/oder die Zusatzstoffe im Wesentlichen nicht verändert.

Weiter ist zur Lösung der Aufgabe eine Verwendung einer Fluidleitung gemäß der vorhergehenden Beschreibung zum Fördern von Kraftstoff in einem Fahrzeug vorgesehen.

Die Wirkungen und Vorteile der Verwendung einer Fluidleitung ergeben sich aus der oben angeführten Beschreibung der Fluidleitung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine schematische Darstellung einer Fluidleitung; und
- Fig. 2: eine Schnittansicht durch die Fluidleitung aus Figur 1.

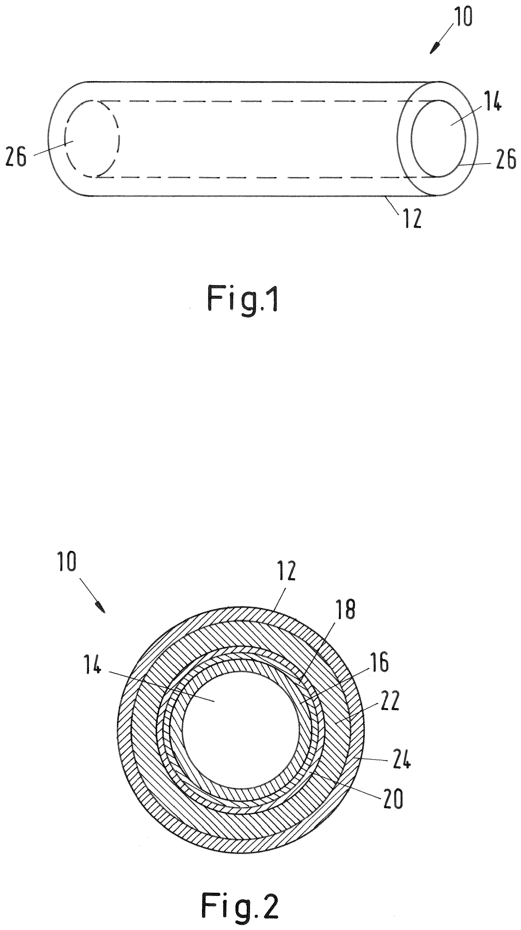

In den Figuren 1 und 2 ist eine Fluidleitung 10 dargestellt, die zum Beispiel eine Kraftstoffleitung in einem Fahrzeug sein kann. Der Kraftstoff kann dabei Alkohol oder andere flüchtige Stoffe oder aggressive Chemikalien aufweisen. Die Fluidleitung 10 kann zumindest einen Teilabschnitt der Kraftstoffleitung zwischen dem Kraftstofftank und dem Motor eines Fahrzeugs bilden.

Die Fluidleitung 10 umfasst gemäß Figur 1 ein Rohr 12, das einen Innenraum 14 umschließt. Der Innenraum 14 erstreckt sich durch das gesamte Rohr 12 und weist an den Enden des Rohres 12 Durchtrittsöffnungen 26 auf. Das Rohr 12 kann mit weiteren Leitungselementen der Kraftstoffleitung oder einer anderen Leitung verbunden werden, sodass die Durchtrittsöffnungen 26 einen Übergang des Innenraums zu den Lumen von weiteren Leitungselementen bilden. Das zu transportierende Fluid wird dann durch eine der Durchtrittsöffnungen 26 in den Innenraum 14 des Rohres 12 eingeleitet und durch die andere Durchtrittsöffnung 26 ausgeleitet.

Das Rohr 12 ist aus einem Kunststoffmaterial gefertigt, das mehrschichtig aufgebaut ist. Damit ist gemeint, dass das Rohr 12 eine Rohrwand aufweist, die schichtweise verschiedene Materialien aufweist.

Figur 2 zeigt dabei ein Querschnitt durch die Fluidleitung 10. Das Rohr 12 der Fluidleitung 10 umfasst hierbei fünf Schichten.

Die innere, erste Schicht 16 bildet die Innenwand des Rohres 12, die den Innenraum 14 begrenzt. Die innere, erste Schicht 16 umfasst Polyamid 9T (PA9T). Dabei kann die innere, erste Schicht 16 vollständig aus Polyamid 9T bestehen. Die innere, erste Schicht 16 aus Polyamid 9T weist eine geringe Löslichkeit und eine geringe Permeabilität für die meisten Stoffe, insbesondere für Kraftstoffe und deren Komponenten und Additive, auf. Sie bildet auch eine Barriere gegen Austritt von Wasser. Damit bildet die innere, erste Schicht 16 eine Barriere gegen einen Durchtritt von chemischen Komponenten und bewirkt weiter einen Schutz für die restlichen Abschnitte des Rohres 12, die durch die Komponenten des Fluids, insbesondere von Kraftstoffen, aufgelöst werden könnten.

In dem in Figur 2 gezeigten Beispiel, weist die innere, erste Schicht 16 eine Dicke auf, die 15 % bis 25 % der gesamten Wanddicke des Rohres 12 bildet.

Die zweite Schicht 18 umfasst Polyamid 12 und erstreckt sich um die innere, erste Schicht 16 herum. Die zweite Schicht 18 reduziert den Austritt von Wasser der inneren, ersten Schicht 16 weiter. Weiter verstärkt die zweite Schicht 18 die mechanischen Eigenschaften des Rohres, so dass Fluide gegebenenfalls unter einem hohen Druck durch die Fluidleitung 10 transportiert werden können.

In diesem Beispiel weist die zweite Schicht 18 eine Dicke auf, die 12 bis 18 % der gesamten Wanddicke des Rohres 12 bildet.

Die dritte Schicht 20 umfasst Polyamid 612 und erstreckt sich um die zweite Schicht 18 und damit auch um die innere, erste Schicht 16 herum. Die dritte Schicht 20 schließt sich dabei von dem Innenraum 14 aus gesehen an die zweite Schicht 18 an.

Die dritte Schicht 20 erhöht die Zug- und Biegefestigkeit des Rohrs 12 und ist dabei dennoch nassfest und elastisch. Damit erhöht die dritte Schicht 20 die Stabilität des Rohrs 12 weiter.

Dabei kann die dritte Schicht 20 in diesem Beispiel eine Dicke aufweisen, die 2 % bis 18 % der gesamten Wanddicke des Rohres 12 bildet.

Die vierte Schicht 22 umfasst Polyamid 6 und bildet mit einer Schichtdicke, die in diesem Beispiel 30 bis 50 % der Wanddicke des Rohres 12 umfasst, die Grundstruktur des Rohres 12. Die vierte Schicht 22 ist durch das Polyamid 6 mechanisch nahezu ebenso stabil wie die anderen Schichten und dabei hoch verfügbar und relativ kostengünstig. Durch die Kombination mit den anderen Schichten können die Kosten des Rohres gesenkt werden, ohne dabei Abstriche bei den benötigten physikalischen Eigenschaften hinzunehmen.

Die vierte Schicht 22 erstreckt sich weiter um die dritte Schicht 20 herum und damit ebenso um die zweite Schicht 18 und die innere, erste Schicht 16.

Die äußere, fünfte Schicht 24 weist wie die dritte Schicht 20 Polyamid 612 auf. Die fünfte Schicht 24 erstreckt sich um die vierte Schicht 22 und damit um die anderen Schichten herum. Sie bildet die äußerste Schicht des Rohres 12 und grenzt damit das Rohr 12 zur Umgebung ab.

Durch das Polyamid 612 ist die äußere, fünfte Schicht 24 unempfindlich gegen die meisten Stoffe, die zum Beispiel in einem Fahrzeug angewendet werden. Ein Austreten dieser Stoffe aus den entsprechenden darüberliegenden oder benachbarten Rohrleitungen und eine Benetzung der äußeren, fünften Schicht 24 mit diesen Stoffen hat für die äußere, fünfte Schicht 24 daher keine Folgen, die die physikalischen Eigenschaften des Rohres 12 betreffen. Die äußere fünfte Schicht 24 bildet damit eine Schutzschicht für die vier inneren Schichten 16, 18, 20 und 22.

Die Dicke der äußeren, fünften Schicht 24 beträgt in diesem Beispiel 12 % bis 28 % der Wanddicke des Rohres 12. Damit wird ein ausreichender Schutz der innenliegenden Schichten gewährleistet.

Weiter kann die äußere, fünfte Schicht 24 eine Mischung aus Polyamid 612 und einem Farbgranulat aufweisen. Die äußere, fünfte Schicht 24 kann damit entsprechend der Farbe des Farbgranulats eingefärbt werden ohne, dass die physikalischen Eigenschaften des Polyamid 612 durch das Farbgranulat gestört werden.

Dabei kann die äußere, fünfte Schicht 24 zusätzlich zum Polyamid 612ein Farbgranulat und/oder weitere Zusatzstoffe aufweisen.

Im Folgenden sind die Materialien der Schichten mit den Schichtdicken-Anteilen tabellarisch aufgelistet. Die Schicht mit der Nummer 1 ist in der Tabelle dabei die innere, erste Schicht 16 und die Schicht mit der Nummer 5, die äußere, fünfte Schicht 24. Die Schichten mit der Nummer 2, 3 und 4 entsprechen in der Tabelle daher den Schichten 18, 20 und 22.

| Schicht | Material | Schichtverteilung |
|---|---|---|
| 1 | PA9T | 20+/-5 % |
| 2 | PA12 | 10+/-8% |
| 3 | PA612 | 10+/-8 % |
| 4 | PA6 | 40+/-10 % |
| 5 | PA612 | 20+/-8 % |
| | Ggf. Farbgranulat | |

Entsprechend der Schichtdicken kann eine Fluidleitung 10 mit einem Rohr 12 bereitgestellt werden, bei der die innere, erste Schicht 16 eine Dicke im Bereich von beispielsweise 0,1 mm und 0,3 mm, vorzugsweise 0,2, mm aufweist. Die zweite Schicht 18 kann dann eine Dicke im Bereich von 0,01 mm bis 0,2 mm aufweisen, vorzugsweise 1 mm,. Die dritte Schicht 20 kann in diesem Fall eine Dicke im Bereich von ebenfalls 0,01 mm bis 0,2 mm, vorzugsweise 1 mm, aufweisen. Weiter kann die vierte Schicht 22 eine Dicke im Bereich von 0,3 mm bis 0,5 mm, vorzugsweise 0,4 m, aufweisen. Weiter kann dann die fünfte Schicht 24 eine Dicke im Bereich von 0,1 mm bis 0,3 mm, vorzugsweise 0,2 mm, aufweisen.

### Bezugszeichenliste

- 10: Fluidleitung
- 12: Rohr
- 14: Innenraum
- 16: innere, erste Schicht
- 18: zweite Schicht
- 20: dritte Schicht
- 22: vierte Schicht
- 24: äußere, fünfte Schicht
- 26: Durchtrittsöffnung

## Patentansprüche

1. Fluidleitung (10) mit einem Rohr (12) aus einem mehrschichtigem Kunststoffmaterial, wobei das Rohr (12) einen Innenraum (14) umgibt, **dadurch gekennzeichnet, dass** das Rohr (12) eine innere, erste Schicht (16) aus Polyamid 9T (PA9T), eine zweite Schicht (18) aus Polyamid 12 (PA12), die sich um die erste Schicht (16) herum erstreckt, eine dritte Schicht (20) aus Polyamid 612 (PA612), die sich um die zweite Schicht (18) herum erstreckt, eine vierte Schicht (22) aus Polyamid 6 (PA6), die sich um die dritte Schicht (20) herum erstreckt, und eine äußere, fünfte Schicht (24) aus Polyamid 612 (PA612) aufweist, wobei die innere, erste Schicht (16) den Innenraum (14) begrenzt.

2. Fluidleitung nach Anspruch 1, **dadurch gekennzeichnet, dass** die innere, erste Schicht (16) eine Dicke im Bereich von 15 % bis 25 %, vorzugsweise 20 % der gesamten Wanddicke des Rohres (12) aufweist.

3. Fluidleitung nach Anspruch 1 oder 2, **dadurch gekennzeichnet, dass** die zweite Schicht (18) eine Dicke im Bereich von 2 % bis 18 %, vorzugsweise 10 %, einer Wanddicke des Rohres (12) aufweist.

4. Fluidleitung nach einem der vorhergehenden Ansprüche, **dadurch gekennzeichnet, dass** die dritte Schicht (20) eine Dicke im Bereich von 2 % bis 18 %, vorzugsweise 10 %, einer Wanddicke des Rohres (12) aufweist.

5. Fluidleitung nach einem der vorhergehenden Ansprüche, **dadurch gekennzeichnet, dass** die vierte Schicht (22) eine Dicke im Bereich von 30 % bis 50 %, vorzugsweise 40 %, einer Wanddicke des Rohres (12) aufweist.

6. Fluidleitung nach einem der vorhergehenden Ansprüche, **dadurch gekennzeichnet, dass** die äußere, fünfte Schicht (24) eine Dicke im Bereich von 12 % bis 28 %, vorzugsweise 20 %, einer Wanddicke des Rohres (12) aufweist.

7. Fluidleitung nach einem der vorhergehenden Ansprüche, **dadurch gekennzeichnet, dass** die äußere, fünfte Schicht (24) zusätzlich ein Farbgranulat aufweist.

8. Verwendung einer Fluidleitung (10) gemäß einem der vorhergehenden Ansprüche zum Fördern von Kraftstoff in einem Fahrzeug.

## Claims

1. Fluid line (10) having a tube (12) composed of a multilayered plastics material, wherein the tube (12) surrounds an interior space (14), **characterized in that** the tube (12) has an inner, first layer (16) of polyamide 9T (PA9T), a second layer (18) of polyamide 12 (PA12), which extends around the first layer (16), a third layer (20) of polyamide 612 (PA612), which extends around the second layer (18), a fourth layer (22) of polyamide 6 (PA6), which extends around the third layer (20), and an outer, fifth layer (24) of polyamide 612 (PA612), wherein the inner, first layer (16) delimits the interior space (14) .

2. Fluid line according to Claim 1, **characterized in that** the inner, first layer (16) has a thickness in the range of 15% to 25%, preferably 20%, of the entire wall thickness of the tube (12).

3. Fluid line according to Claim 1 or 2, **characterized in that** the second layer (18) has a thickness in the range of 2% to 18%, preferably 10%, of a wall thickness of the tube (12).

4. Fluid line according to one of the preceding claims, **characterized in that** the third layer (20) has a thickness in the range of 2% to 18%, preferably 10%, of a wall thickness of the tube (12).

5. Fluid line according to one of the preceding claims, **characterized in that** the fourth layer (22) has a thickness in the range of 30% to 50%, preferably 40%, of a wall thickness of the tube (12).

6. Fluid line according to one of the preceding claims, **characterized in that** the outer, fifth layer (24) has a thickness in the range of 12% to 28%, preferably 20%, of a wall thickness of the tube (12).

7. Fluid line according to one of the preceding claims, **characterized in that** the outer, fifth layer (24) additionally comprises coloured pellets.

8. Use of a fluid line (10) according to one of the preceding claims for conveying fuel in a vehicle.

## Revendications

1. Conduite de fluide (10) comportant un tuyau (12) en un matériau plastique multicouche, le tuyau (12) entourant un espace intérieur (14), **caractérisée en ce que** le tuyau (12) présente une première couche intérieure (16) en polyamide 9T (PA9T), une deuxième couche (18) en polyamide 12 (PA12), qui s'étend autour de la première couche (16), une troisième couche (20) en polyamide 612 (PA612), qui s'étend autour de la deuxième couche (18), une quatrième couche (22) en polyamide 6 (PA6), qui s'étend autour de la troisième couche (20) et une cinquième couche extérieure (24) en polyamide 612 (PA612), la première couche intérieure (16) délimitant l'espace intérieur (14).

2. Conduite de fluide selon la revendication 1, **caractérisée en ce que** la première couche intérieure (16) présente une épaisseur dans la plage de 15 % à 25 %, de préférence de 20 % d'une épaisseur de paroi totale du tuyau (12).

3. Conduite de fluide selon la revendication 1 ou 2, **caractérisée en ce que** la deuxième couche (18) présente une épaisseur dans la plage de 2 % à 18 %, de préférence de 10 % d'une épaisseur de paroi du tuyau (12) .

4. Conduite de fluide selon l'une des revendications précédentes, **caractérisée en ce que** la troisième couche (20) présente une épaisseur dans la plage de 2 % à 18 %, de préférence de 10 % d'une épaisseur de paroi du tuyau (12).

5. Conduite de fluide selon l'une des revendications précédentes, **caractérisée en ce que** la quatrième couche (22) présente une épaisseur dans la plage de 30 % à 50 %, de préférence de 40 % d'une épaisseur de paroi du tuyau (12).

6. Conduite de fluide selon l'une des revendications précédentes, **caractérisée en ce que** la cinquième couche extérieure (24) présente une épaisseur dans la plage de 12 % à 28 %, de préférence de 20 % d'une épaisseur de paroi du tuyau (12).

7. Conduite de fluide selon l'une des revendications précédentes, **caractérisée en ce que** la cinquième couche extérieure (24) comprend en outre un granulé coloré.

8. Utilisation d'une conduite de fluide (10) selon l'une des revendications précédentes pour transporter du carburant dans un véhicule.
